Europäisches Patentamt

European Patent Office

Office européen des brevets

(11) Publication number: **0 069 599**
**B1**

(12) **EUROPEAN PATENT SPECIFICATION**

(45) Date of publication of patent specification: **10.09.86**

(21) Application number: **82303580.3**

(22) Date of filing: **08.07.82**

(51) Int. Cl.⁴: **C 11 C 3/10,** A 23 D 5/00,
A 23 G 3/00

(54) **Edible fat process.**

(30) Priority: **08.07.81 GB 8121057**

(43) Date of publication of application:
**12.01.83 Bulletin 83/02**

(45) Publication of the grant of the patent:
**10.09.86 Bulletin 86/37**

(84) Designated Contracting States:
**AT BE CH DE FR GB IT LI NL SE**

(56) References cited:
**EP-A-0 034 065**
**FR-A-2 340 979**
**GB-A-2 042 579**

(73) Proprietor: **UNILEVER PLC**
**Unilever House Blackfriars P.O. Box 68**
**London EC4P 4BQ (GB)**
(84) **GB**

(73) Proprietor: **UNILEVER NV**
**Burgemeester s'Jacobplein 1 P.O. Box 760**
**NL-3000 DK Rotterdam (NL)**
(84) **BE CH DE FR IT LI NL SE AT**

(72) Inventor: **Macrae, Alasdair Robin**
**28 Leyside**
**Bromham Bedford (GB)**
Inventor: **Brench, Alan William**
**18 Glenfield Close**
**Rushden Northamptonshire (GB)**

(74) Representative: **Litherland, Donald et al**
**UNILEVER PLC Patents Division P.O. Box 68**
**Unilever House**
**London EC4P 4BQ (GB)**

Courier Press, Leamington Spa, England.

**Description**

This invention relates to improved food fats, particularly of the variety used in chocolate confectionery and to methods of making such fats.

Processes for rearranging fat in the presence of a lipase selective in the 1- and 3-positions only, are described in our FR—A—2340979 and EP—A—34065, published 17.11.82 and in GB—A—2042579.

The present invention provides a method of improving fat fractions containing symmetrical disaturated glycerides which are separated from vegetable and animal fats for use as a substitute for cocoabutter, the outstanding melting characteristics of which are attributable to the presence of these glycerides, as outlined in Claim 1. The invention provides a process for the preparation of fat fractions containing symmetrical disaturated glycerides by fractional crystallisation of edible fat comprising a mixture of saturated and unsaturated $C_{16}$—$C_{18}$ fatty acid glycerides combined with interesterification in which an interesterification catalyst selectively active in the 1- and 3-positions only is used to randomise the fatty acid residues of the glycerides in the fat at these positions only.

Fractionation is more or less effective to remove trisaturated glycerides of a high-melting solid fraction, and also di- and tri-unsaturated glycerides as a lower melting fluid fraction, from disaturated glycerides in fats, although complete separation may not be economically feasible and the isomeric, asymmetric disaturated glycerides are not normally separable at all by this means. The effect of the selective enzyme treatment in the process of the invention is to improve the fat fraction required by increasing the amount of symmetrical disaturated glycerides it contains and/or reducing the amount of asymmetric disaturated glycerides present with it. In doing so other glycerides may be increased in amount but being either more highly unsaturated or less unsaturated, are readily separated by fractionation.

One effect of the invention may therefore be to improve the symmetry of fats, expressed as the ratio of the symmetrical to the asymmetrical disaturated glycerides present in the fat, i.e. SUS:SSU, without introducing new fatty acid residues. It can be calculated mathematically that this ratio will be increased in a fat consisting of the two isomers which is subjected to the selective enzyme treatment of the invention, provided that the ratio is initially at least 1:2 molar. Generally speaking, this minimum ratio is substantially exceeded in vegetable fats, on account of the preference of unsaturated fatty acids to occupy the 2-position on the glycerides present. Nevertheless, palm oil contains sufficient of the asymmetric disaturated glycerides to be an embarrassment, affecting as it does the melting qualities of even the most carefully fractionated palm mid-fractions which are used in cocoabutter substitute fats. The invention improves palm mid-fractions by decreasing the amount of asymmetric disaturated glycerides present.

Shea oil on the other hand contains very little asymmetric disaturated glycerides and the principal effect of the enzyme step in the application of the process of the invention to shea oil is to increase the amount of the symmetrical isomer by conversion of the asymmetric $SU_2$. Whether by this or the former mechanism described, the effect of the interesterification is to enhance the symmetry of the fat. In the subsequent fractionation of the interesterified fat a fraction is recovered rich in symmetrical disaturated glycerides.

Fats subjected to the enzyme treatment should contain as little 2-saturated glycerides as possible, i.e. $P_3$, USU and SSU.

As proposed by Richardson and later confirmed by Van der Wal (J. Am. Oil Chem. Soc., 37, pages 18 to 20), the fatty acid residues of a vegetable fat are distributed in the glycerides of the fat in a 1-, 3-random-2-random pattern. The fatty acid residues in 1- and 3-positions are therefore already randomly distributed and the application of the invention to vegetable fats includes a preliminary step in which this random distribution in the 1- and 3-positions is changed by fractionation. Fractionation for this purpose may be carried out to recover the symmetrical disaturated glycerides in a fluid fraction substantially free from trisaturated glycerides, or in a crystallised fraction substantially free from di- and tri-unsaturated glycerides. Any of the unsaturated fractions obtained may be subjected to the selective enzyme treatment step of the invention followed by fractionation. Alternatively, a mid-fraction rich in the disaturated glycerides may be recovered and this and/or the unsaturated fractions separated from it then subjected to the enzyme treatment followed by refractionation.

Animal fats do not appear to follow the behaviour of vegetable fats in the persistence with which the 2-position is occupied by unsaturated fatty acid residues, nor in the distribution of the fatty acid residues in the 1- and 3-positions. Accordingly, substantially greater proportions of the asymmetric isomer occur in the disaturated glycerides of animal fats and a preliminary treatment affecting the distribution of fatty acids in the 1- and 3-positions is not normally necessary for the fat to be susceptible to changes in glyceride composition by the enzyme treatment step of the invention. Nevertheless, fractionation before this treatment is carried out in the process of the invention before, preferably to remove from a disaturated fraction, a more highly unsaturated fluid fraction and more particularly, an upper-melting trisaturated glyceride fraction. As before, the enzyme treatment may then be applied to any of the unsaturated fractions obtained.

From whatever source they are obtained, fats containing both saturated and unsaturated fatty acids are rearranged in the enzyme treatment step of the invention by converting monosaturated glycerides to symmetrical disaturated glycerides ($2 = SUS + U_3$) and by improving the ratio of symmetrical to asymmetric disaturated glycerides ($2 SSU = USU + SSS$).

2

The present invention provides a process for the preparation of an improved confectionery fat, characterised by the fact that a fat consisting substantially of saturated and unsaturated $C_{16}$—$C_{18}$ fatty acid glycerides is fractionated and thereafter rearranged by contact with an enzyme selectively active in the 1- and 3-positions only and the rearranged fat is fractionated to recover a fraction comprising symmetrical disaturated $C_{16}$ and $C_{18}$ glycerides.

Suitable vegetable fats include palm oil, shea, sal, pentadesma, aceituno, phulwara and mango kernel oils. In addition to these vegetable fats, which consist predominantly of $C_{16}/C_{18}$ fatty acids, suitable animal fats include tallow. Lard may contain too much asymmetric glyceride to be suitable, according to its source. While the fats consist substantially of $C_{16}$ and $C_{18}$ fatty acid glycerides, minor amounts of other fatty acids may be present whether of shorter- or longer-chain, length. The fats of the lauric group, e.g. palm kernel and coconut oils, are however not included within the scope of the invention. The symmetry for which fats are prized confer excellent melting characteristics and compatibility with cocoabutter, and refers to the presence of saturated fatty acid residues in the two outer or 1,3-positions of glycerides, whether or not they possess the same chain length.

Suitable enzymes for catalysing the rearrangement in the 1- and 3-positions only are provided by lipase enzymes. These include those produced by *Aspergillus niger, Rhizopus arrhizus, Rhizopus japonicus* and *Rhizopus niveus, Mucor javanicus* and *Mucor miehei.* Such enzymes require the presence of water to initiate and sustain their activity and catalyse the reversible hydrolysis and esterification reactions. The reaction is therefore carried out in the presence of small amounts of water, i.e. below 10%, preferably less than 5%, and more particularly not more than 1% by weight of the fat to minimise hydrolysis. In general, a balance must be struck to provide the minimum water activity consistent with maintaining the activity of the enzyme. As to what this may be, catalysts vary substantially in their demands for water and variants may be found and used the minimal water requirements, thereby improving the process by diminishing the extent of hydrolysis. The reaction is also preferably carried out in the presence of a non-aqueous, substantially water-immiscible solvent for example hexane having a relatively low boiling point, i.e. below 100°C to facilitate its removal from the interesterified fat. The interesterification reaction is also preferably carried out in accordance with our European patent application no. 64855, published 17.11.82 with the provision of means to control the water activity Aw of the reaction system. The amount of catalyst is preferably from 0.1 to 10%, particularly 0.1 to $7\frac{1}{2}$% by weight of the fat. The catalyst is preferably supported on a Celite or other inert support as described in FR—A—2340979 and EP—A—34065 and may be dispersed in the reaction mass after being activated by contact with water. Alternatively the catalyst after activation may be supported in a fixed bed. The reaction temperature is preferably from 0 to 60°C, more preferably 10 to 40°C. Higher temperatures tend to inactivate these enzyme catalysts.

After the interesterification rearrangement is complete, the reaction mass is separated from the catalyst and any solvent present removed prior to the further recrystallisation step. Alternatively, sufficient solvent may be left with the fat for the refractionation step. Preferably the fractionation is effected from an organic solvent, e.g. acetone, hexane or nitropropane. The fractionation may alternatively be carried out in the absence of solvent or by the so-called Lanza process.

Example 1

Shea oil was fractionated from acetone at 5°C to recover a solid stearine fraction containing principally disaturated glycerides and a fluid oleine fraction which was recovered from the solvent, refined and neutralised. The oleine fraction was dissolved in twice its weight of petroleum ether of boiling range 100 to 120°C and the solution percolated at 40°C at a flow rate of 10.4 ml/hr through alternate layers of Celite and Celite-lipase catalyst packed in a bed in an upright reactor tube. The layers were previously wetted with water and the catalyst layers comprised *Aspergillus niger* lipase and were prepared in accordance with our EP—A—34065. A total amount of 7 grams of lipase was used.

The product of the first 24 hours was rejected to minimise hydrolysis in the final product which was then collected for 7 days. After removing the solvent, a second stearine fraction in 17% yield based on the neutralised, refined shea oleine was crystallised from a solution of the interesterified material in 3 times its weight of acetone maintained for 30 minutes at 5°C, the precipitated crystals being washed twice with acetone. For comparison a second solid stearine fraction was similarly recovered at the same temperature in 24% yield from the shea oleine without interesterification.

In the accompanying Table 1 glyceride compositions are given for shea oleine before and after interesterification and the solid stearine fractions crystallised from each.

TABLE 1 — Triglyceride compositions

| | Triglycerides wt % | | | | | |
| | SSS | SOS | SSO | SLnS | SOO | Others |
| --- | --- | --- | --- | --- | --- | --- |
| Shea oil | 0.0 | — 47.9 — | | 5.6 | 34.3 | 12.1 |
| Shea oleine | 0.0 | 12.9 | 0.9 | 5.5 | 58.0 | 22.6 |
| Stearine from shea oleine | 0.0 | 41.4 | 1.6 | 7.9 | 38.2 | 11.0 |
| Interesterified shea oleine | 0.0 | 19.0 | 1.1 | 5.3 | 43.7 | 31.5 |
| Example 1 | | | | | | |
| Stearine from interesterified shea oleine | 1.8 | 83.6 | 1.8 | 9.1 | 2.9 | 0.7 |
| Typical stearine from shea oil | 1.0 | 82.8 | 1.1 | 6.3 | 6.9 | 1.6 |

Table 2 shows the solids content of 20°C of the stearine product according to the invention and of a blend of equal parts with a typical palm mid-fraction, together with corresponding data for a typical commercial shea stearine product. From the data it is clear that the stearine from interesterified shea oleine is a useful confectionery fat and that as a result of the interesterification reaction a substantial amount of recoverable, symmetrical disaturated glyceride is generated. By contrast, the control test product contained only half the amount of SOS present in the interesterified stearine product of the invention and is very unsatisfactory as a confectionery fat.

TABLE 2

| | PULSE NMR solids content of stearine (%) at 20°C | | | | | |
| --- | --- | --- | --- | --- | --- | --- |
| Stearine from interesterified shea oleine | 86.7 | 83.2 | 72.9 | 54.6 | 28.2 | 3.1 |
| 50:50 blend of stearine from interesterified shea oleine and palm mid-fraction | 66.6 | 59.9 | 42.9 | 18.4 | 5.0 | 1.2 |
| Typical shea stearine | 84.2 | 83.2 | 80.4 | 76.3 | 66.2 | 6.1 |
| 50:50 blend of typical shea stearine and palm mid-fraction | 68.6 | 63.9 | 49.2 | 24.1 | 7.4 | 0.6 |

Example 2

In this Example a neutralised and refined mid-fraction of palm oil used in cocoabutter substitutes was enzymatically interesterified as described in Example 1, with however, a flow rate of 21.0 ml/hr. The lipase was derived from *Rhizopus japonicus.*

After removing the solvent the interesterified fat was fractionated from a solution in 1.6 times its weight of hexane, maintained for 90 minutes at 8°C. The solid, stearine fraction containing principally trisaturated glycerides was filtered and washed twice with hexane. After combining the filtrate and washings the solvent was removed from the fluid, oleine fraction which was recovered in 75.9% yield based on the interesterified fat.

In Table 3, glyceride compositions are given for the palm mid-fraction starting material, the intermediate interesterified fat therefrom and its oleine fraction. From this data it will be seen that the

4

product from this example contains marginally more symmetrical disaturated glycerides (SOS/SLnS) but substantially less asymmetric disaturated glyceride (SSO).

In all the Tables S = $C_{16}$ + $C_{18}$ saturated fatty acid residues, O = oleyl and Ln = linoleyl.

TABLE 3 — Triglyceride composition

| | SSS | SOS | SSO | SLnS | SOO | Others |
|---|---|---|---|---|---|---|
| Palm oil | 7.0 | 35.7 | 4.4 | 8.6 | 27.5 | 16.8 |
| Palm mid-fraction | 2.4 | 76.9 | 7.3 | 8.3 | 3.9 | 1.2 |
| Interesterified palm mid-fraction | 8.6 | 72.6 | 1.8 | 7.0 | 7.8 | 2.2 |
| Oleine from interesterified palm mid-fraction | 1.0 | 79.4 | 2.2 | 7.5 | 7.6 | 2.3 |

Example 3

Example 1 was repeated on another neutralised and refined mid-fraction of palm oil as used in cocoabutter substitutes. A flow rate of 25 ml/hr was used and the lipase was derived from *Rhizopus japonicus*.

After removing the solvent the interesterified fat was analysed, redissolved in 4 times its weight of acetone, and fractionated after maintaining for 2 hours at 20°C. The solid, stearine fraction containing principally trisaturated glycerides was filtered and washed with acetone. After combining the filtrate and wash the solvent was removed from the fluid, oleine fraction which was recovered in 89% yield based on the interesterified fat.

Following removal of the solvent the oleine fraction was further fractionated from a solution in 7.5 times its weight of acetone, maintained for 30 minutes at 5°C. The solid, stearine fraction from this second fractionation containing principally SOS glycerides was filtered and washed twice and acetone. The solvent was removed from the solid, stearine fraction of this second fractionation by evaporation *in vacuo* to give a mid-fraction in 59% yield based on the original interesterified fat.

In Table 4, glyceride compositions are given for the palm mid-fraction starting material, the intermediate interesterified fat therefrom and the mid-fraction derived from the interesterified fat. From these data it will be seen that the product from this Example contains more symmetrical disaturated glycerides (SOS/SLnS) and substantially less asymmetrical disaturated glycerides (SSO) than the starting palm mid-fraction.

TABLE 4 — Triglyceride Compositions

| | SSS | SOS | SSO | SLnS | SOO | Others |
|---|---|---|---|---|---|---|
| Palm mid-fraction | 4.0 | 73.7 | 7.4 | 8.5 | 4.8 | 1.6 |
| Interesterified palm mid-fraction | 10.5 | 62.9 | 2.5 | 8.4 | 11.7 | 3.9 |
| Mid-fraction ex. interesterified palm | 0.8 | 88.8 | 0.5 | 5.5 | 4.1 | 0.4 |

In Table 5, a clear improvement in the compatibility of the product of this Example upon admixture with cocoabutter over the original palm mid-fraction is demonstrated by reference to the solids content of such mixtures at 20°C as measured by pulse NMR. The softening effect observed in blends of palm mid-fraction with cocoabutter which is due to the presence of the asymmetrical disaturated glycerides (SSO) in the palm mid-fraction is not seen in the equivalent blends incorporating the product of this Example.

TABLE 5 — $N_{29}$ Values

| | 100% PMF | 25 | 50 | 75 | 100% CB |
|---|---|---|---|---|---|
| Control | 71.8 | 68.3 | 64.6 | 76.8 | 82.5 |
| Ex. 3 | 71.8 | 72.2 | 71.5 | 78.5 | 82.7 |

**0 069 599**

### Example 4

Tallow was fractionated from a solution in 3 times its weight of acetone, maintained for 1 hour at 17°C. The solid, stearine fraction containing principally trisaturated glycerides was filtered and washed with acetone. After combining the filtrate and wash the solvent was removed from the fluid, oleine fraction which was recovered in 83% yield based on the tallow.

Following removal of the solvent the oleine fraction was further fractionated from a solution in 5 times its weight of acetone, maintained for 1 hour at 5°C. The solid, stearine fraction from this second fractionation containing principally symmetrical and asymmetrical disaturated glycerides (SOS and SSO) was filtered and washed twice with acetone. The solvent was removed from the solid, stearine fraction of this second fractionation by evaporation *in vacuo* to give a mid-fraction in 20% yield based on the original tallow.

The tallow mid-fraction dissolved in 3 times its weight of petroleum ether of boiling range 100—120°C was enzymatically interesterified as described in Example 3 using 20 g of lipase-celite catalyst prepared from *Rhizopus japonicus* lipase and a flow rate of 12.0 ml/hr.

After removing the solvent the interesterified fat was fractionated from a solution in 3 times its weight of acetone, maintained for 2 hour at 17°C. The solid, stearine fraction containing principally trisaturated glycerides, was filtered and washed with acetone. After combining the filtrate and wash the solvent was removed from the fluid, oleine fraction which was recovered in 82% yield based on the interesterified fat.

Following removal of the solvent the oleine fraction was further fractionated from a solution in 5 times its weight of acetone, maintained for 1 hour at 5°C. The solid, stearine fraction from this second fractionation containing principally symmetrical disaturated glycerides (SOS) was filtered and washed twice with acetone. The solvent was removed from the solid, stearine fraction to give a mid-fraction in 39% yield based on the starting tallow mid-fraction.

In Table 6 glyceride compositions are given for the tallow mid-fraction starting material and the mid-fraction derived from the interesterified tallow mid-fraction. From these data it will be seen that the mid-fraction from the interesterified fat contains substantially more of the desirable symmetrical disaturated cis-monounsaturated glycerides (SOS) and less of the undesirable asymmetrical disaturated cis-monounsaturated glycerides (SSO) than the starting tallow mid-fraction. The ratio of SOS to SSO in the tallow mid-fraction is 3.5, while in the mid-fraction from the interesterified fat it is 7.6.

TABLE 6 — Triglyceride Compositions

|  | SSS | SES | SOS | SSO | Others |
|---|---|---|---|---|---|
| Tallow mid-fraction | 7.0 | 4.6 | 51.4 | 13.7 | 23.3 |
| Mid-fraction ex. interesterified tallow mid-fraction | 4.5 | 0.6 | 75.6 | 10.0 | 9.3 |

S = Saturated fatty acyl group
E = *Trans* monounsaturated fatty acyl group
O = *Cis* monounsaturated fatty acyl group.

### Claims

1. Process for the preparation of an improved confectionery fat, characterised by the fact that a fat consisting substantially of saturated and unsaturated $C_{16}$ and $C_{18}$ fatty acid glycerides is fractionated and thereafter rearranged by contact with an enzyme as rearrangement catalyst which is selectively active in the 1- and 3-positions only and in the absence of other fatty reactants including fatty acids and that the rearranged fat is fractionated to recover a fraction comprising symmetrical disaturated glycerides.

2. Process according to Claim 1, characterised by the fact that the molar ratio SUS:SSU in the fats subjected to interesterification is at least 1:2.

3. Process according to Claim 1 or 2, characterised by the fact that the fat comprises a vegetable or animal fat.

4. Process according to any of the preceding claims, characterised by the fact that the fat comprises palm, shea, sal, cottonseed or tallow fat.

5. Process according to any of the preceding claims, characterised by the fact that the fractionated fat comprises a fraction of palm oil or a lower-melting fraction of shea fat.

6. Process according to any of the preceding claims, characterised by the fact the catalyst comprises a lipase enzyme.

7. Process according to Claim 6, characterized by the fact that the enzyme comprises *Aspergillus* or *Rhizopus* enzyme.

8. Process according to Claim 6 or 7, characterised by the fact that the amount of lipase in contact with the fat is from 0.1 to $7\frac{1}{2}$% by weight of the fat.

6

9. Process according to any of the preceding claims, characterised by the fact that the enzyme is supported on an inert support.

10. Process according to any of the preceding claims, characterised by the fact that the rearrangement is carried out at a temperature from 10 to 40°C.

11. Process according to any of the preceding claims, characterised by the fact that the rearrangement is carried out in a non-aqueous substantially water-immiscible solvent.

12. Process according to Claim 11, characterised in that the boiling point of the solvent is below 100°C.

13. Process according to any of the preceding claims, characterised in that the rearranged fat is fractionally crystallised from solvent.

14. Process according to Claim 13, in which the rearranged fat is fractionally crystallised from the solvent in which it is rearranged.

15. Process according to any of the preceding Claims 11 to 14 where the solvent is acetone or hexane.

16. Confectionery fat obtainable by a process as claimed in any of the preceding claims.

## Patentansprüche

1. Verfahren zur Herstellung eines verbesserten Konditoriewarenfetts, gekennzeichnet, durch die Tatsache, daß ein im wesentlichen aus gesättigten und ungesättigten $C_{16}$- und $C_{18}$-Fettsäureglyceriden bestehendes Fett fraktioniert und danach durch Kontakt mit einem Enzym als Umlagerungskatalysator umgelagert wird, das lediglich in den 1- und 3-Stellungen und in Abwesenheit anderer Fettreaktanten, enschließlich Fettsäuren, selektiv aktiv ist, und daß das umgelagerte Fett fraktioniert wird, um eine symmetrische, zweifach gesättigte Glyceride enthaltende Fraktion zu gewinnen.

2. Verfahren nach Anspruch 1, gekennzeichnet durch die Tatsache, daß das Molverhältnis SUS:SSU in den der Umesterung unterworfenen Fetten mindestens 1:2 ist.

3. Verfahren nach Anspruch 1 oder 2, gekennzeichnet durch die Tatsache, daß das Fett ein Pflanzen- oder Tierfett enthält.

4. Verfahren nach irgendeinem der vorhergehenden Ansprüche, gekennzeichnet durch die Tatsache, daß das Fett Palm-, Shea-, Sal-, Baumwollsaat- oder Talgfett enthält.

5. Verfahren nach irgendeinem der vorhergehenden Ansprüche, gekennzeichnet durch die Tatsache, daß das fraktionierte Fett eine Fraktion von Palmöl oder eine niedriger schmelzende Fraktion von Sheafett enthält.

6. Verfahren nach irgendeinem der vorhergehenden Ansprüche, gekennzeichnet durch die Tatsache, daß der Katalysator ein Lipaseenzym enthält.

7. Verfahren nach Anspruch 6, gekennzeichnet durch die Tatsache, daß das Enzym das *Aspergillus*- oder *Rhizopus*-Enzym enthält.

8. Verfahren nach Anspruch 6 oder 7, gekennzeichnet durch die Tatsache, daß die Menge der mit dem Fett in Kontakt stehenden Lipasen, 0,1 bis 7½ Gew.-% des Fettes beträgt.

9. Verfahren nach irgendeinem der vorhergehenden Ansprüche, gekennzeichnet durch die Tatsache, daß das Enzym auf einem inerten Träger gelagert ist.

10. Verfahren nach irgendeinem der vorhergehenden Ansprüche, gekennzeichnet durch die Tatsache, daß die Umlagerung bei einer Temperatur von 10 bis 40°C durchgeführt wird.

11. Verfahren nach irgendeinem der vorhergehenden Ansprüche, gekennzeichnet durch die Tatsache, daß die Umlagerung in einem nicht-wässrigen, im wesentlichen mit Wasser nicht mischbaren Lösungsmittel durchgeführt wird.

12. Verfahren nach Anspruch 11, dadurch gekennzeichnet, daß der Siedepunkt des Lösungsmittels unter 100°C liegt.

13. Verfahren nach irgendeinem der vorhergehenden Ansprüche, dadurch gekennzeichnet, daß das umgelagerte Fett aus einem Lösungsmittel fraktioniert kristallisiert wird.

14. Verfahren nach Anspruch 13, wobei das umgelagerte Fett aus dem Lösungsmittel, indem es umgelagert wird, fraktionert kristallisiert wird.

15. Verfahren nach irgendeinem der vorhergehenden Ansprüche 11 bis 14, wobei das Lösungsmittel Aceton oder Hexan ist.

16. Konditoreiwarenfett, erhältlich durch ein nach irgendeinem der vorhergehenden Ansprüche beanspruchtes Verfahren.

## Revendications

1. Procédé de préparation d'une graisse pour confiserie améliorée, caractérisé en ce qu'on fractionne une graisse consistant sensiblement en glycérides d'acides gras saturées et insaturées en $C_{16}$ et $C_{18}$ et ensuite on regroupe par contact avec une enzyme en qualité de catalyseur de regroupement, qui est sélectivement active seulement en positions 1 et 3 et en l'absence d'autres réactifs gras y compris les acides gras et en ce qu'on fractionne la graisse regroupée pour récupérer une fraction comprenant des glycérides disaturées symétriques.

2. Procédé selon la revendication 1, caractérisé en ce que le rapport molaire SUS:SSU dans les graisses soumises à l'interestérification est d'au moins 1:2.

3. Procédé selon la revendication 1 ou 2, caractérisé en ce que la graisse est constituée de graisse animale ou végétale.

4. Procédé selon l'une quelconque des revendications précédentes, caractérisé en ce que la graisse est la graisse de palme, de Galam, de sal, de coton ou de suif.

5. Procédé selon l'une quelconque des revendications précédentes, caractérisé en ce que la graisse fractionnée comprend une fraction d'huile de palme ou une fraction à plus bas point de fusion de graisse de Galam.

6. Procédé selon l'une quelconque des revendications précédentes, caractérisé en ce que le catalyseur comprend une enzyme lipase.

7. Procédé selon la revendication 6, caractérisé en ce que l'enzyme comprend l'enzyme *Aspergillus* ou *Rhizopus.*

8. Procédé selon la revendication 6, caractérisé en ce que la quantité de lipase en contact avec la graisse est de 0,1 à 7,5% en poids de la graisse.

9. Procédé selon l'une quelconque des revendications précédentes, caractérisé en ce que l'enzyme est supportée sur un support inerte.

10. Procédé selon l'une quelconque des revendications précédentes, caractérisé en ce que le regroupement est effectué à température allant de 10 à 40°C.

11. Procédé selon l'une quelconque des revendications précédentes, caractérisé en ce que le regroupement est effectué dans un solvant sensiblement non aqueux non miscible avec l'eau.

12. Procédé selon la revendication 11, caractérisé en ce que le point d'ébullition du solvant est au-dessus de 100°C.

13. Procédé selon l'une quelconque des revendications précédentes, caractérisé en ce que la graisse regroupée est cristallisée par fractions dans un solvant.

14. Procédé selon la revendication 13, dans lequel la graisse regroupée est cristallisée par fractions dans le solvant dans lequel elle est regroupée.

15. Procédé selon l'une quelconque des revendications 11 à 14, dans lequel le solvant est l'acétone ou l'hexane.

16. Graisse pour confisierie qu'on obtient par un procédé tel que revendiqué dans l'une quelconque des revendications précédentes.